# EUROPÄISCHE PATENTSCHRIFT

(11) **EP 1 567 337 B1**
(45) Veröffentlichungstag und Bekanntmachung des Hinweises auf die Patenterteilung: **17.02.2010**
(21) Anmeldenummer: 03811764.4
(22) Anmeldetag: 20.11.2003
(51) Int. Cl.: B32B 27/32, B32B 27/08

(54) **TRANSPARENTE BIAXIAL ORIENTIERTE POLYOLEFINFOLIE MIT VERBESSERTER SAUERSTOFFBARRIERE**
TRANSPARENT BIAXIALLY ORIENTED POLYOLEFIN FILM HAVING AN IMPROVED OXYGEN BARRIER
FILM DE POLYOLEFINE TRANSPARENT ORIENTE BIAXIALEMENT, A BARRIERE OXYGENE AMELIOREE

(30) Priorität: 23.11.2002 DE 10254731
(43) Veröffentlichungstag der Anmeldung: 31.08.2005
(73) Patentinhaber: Treofan Germany GmbH & Co.KG, 66539 Neunkirchen (DE)
(72) Erfinder: BUSCH, Detlef, 66740 Saarlouis (DE); JUNG, Joachim, 66540 Neunkirchen/Wiebelskirchen (DE)
(74) Vertreter: Kremer, Viola
(86) Internationale Anmeldenummer: PCT/EP2003/012974
(87) Internationale Veröffentlichungsnummer: WO 2004/048088

(56) Entgegenhaltungen:
- WO-A-97/47678
- GB-A- 1 424 425
- US-A- 5 525 421
- US-A- 5 882 798

## Beschreibung

Die Erfindung betrifft eine transparente Polyolefinfolie mit verbesserter Sauerstoffbarriere, sowie deren Verwendung, insbesondere zur Herstellung von Laminaten.

Im Stand der Technik sind Verfahren zur Verbesserung von Barriereeigenschaften von Polyolefinfolien, insbesondere Polypropylenfolien bekannt. Polypropylenfolien weisen an sich bereits eine gute Wasserdampfbarriere auf. Die Sauerstoffbarriere ist verbesserungsbedürftig. Zur Verbesserung der Sauerstoffbarriere wurden in der Vergangenheit verschiedene Beschichtungssysteme entwickelt. Es ist beispielsweise bekannt Polypropylenfolien mit Beschichtungen aus PVDC oder PVOH zu versehen. Durch diese Maßnahme kann die Sauerstoffbarriere von ca. 2000 cm³/m²*Tag*bar mittels PVDC-Beschichtung auf ca. 20 cm³/m²*Tag*bar und mittels PVOH-Beschichtungen auf ca. 3 cm³/m²*Tag*bar gesenkt werden. Es hat sich jedoch erwiesen, daß diese Barrierewerte von PVOH beschichteten Folien empfindlich gegenüber Luftfeuchte sind.

Neben diesen Beschichtungen wurden in jüngster Zeit Beschichtungssysteme entwickelt, die aus wässrigen Lösungen aufgebracht werden können und die auf Polysilikaten beruhen. Diese Technologie ist beispielsweise in der PCT Anmeldung 97/47678 beschrieben. Diesen Systemen haftet der Nachteil an, daß die Barrierewerte starken Schwankungen unterliegen. Auch hier hat die Luftfeuchtigkeit einen -manchmal unerwünschten negativen- Einfluß auf die Sauerstoffbarriere. Diese Nachteile können teilweise durch eine zusätzliche Primerschicht behoben werden. Die Primerschicht wird auf die vorbehandelte Polypropylenfolie aufgebracht. Anschließend erfolgt die Beschichtungen mit der wässrigen Polysilikatlösung auf die geprimert Folie. Diese Weiterentwicklung ist in US 6,368,677 beschrieben. Es wurde gefunden, daß diese Folienstrukturen eine weiter verbesserte Sauerstoffbarriere aufweisen, welche aber noch immer nicht für alle Anwendungen ausreicht. Des weiteren ist die Verbundhaftung bei der Weiterverarbeitung der silikatbeschichteten Folien zu Laminaten und Verbunden mangelhaft.

In der PCT Anmeldung mit der Veröffentlichungsnummer WO 00/09596 ist eine weitere Ausführungsform von polysilikatbeschichteten Folien beschrieben, bei denen die Polysilikatschicht auf eine mit Maleinsäureanhydrid modifizierte Deckschicht aufgebracht wird. Nach dieser Lehre weißt die Polysilikatschicht nicht nur eine gute Haftung auf der modifizierten Oberfläche auf, es zeigt sich weiterhin, daß auch die Barrierewerte durch diese Maßnahme verbessert werden.

Die Aufgabe der vorliegenden Erfindung bestand daher darin, eine Polyolefinfolie zur Verfügung zu stellen, welche sich durch eine besonders gute Sauerstoffbarriere auszeichnet, wobei diese Sauerstoffbarriere sowohl bei niedriger als auch bei hoher Luftfeuchtigkeit erhalten bleiben muß. Des weiteren ist es wichtig, daß sich die Folie zur Herstellung von Laminaten eignet, d.h. daß diese Laminat eine gute Verbundhaftung, insbesondere auch nach Siegelung aufweisen müssen. Die übrigen geforderten Gebrauchseigenschaften der Folie dürfen dabei nicht beeinträchtigt werden.

Diese Aufgabe wird gelöst durch eine transparente Polyolefinfolie, welche mindestens vier Schichten BZPS umfaßt, wobei die Schicht B eine Basisschicht aus Polyolefinen ist und die Schicht Z eine Schicht aus Maleinsäureanhydrid modifizierten Polyolefinen ist und die Schicht P eine Primerschicht ist, welche auf einer Oberfläche der Schicht Z aufgebracht ist und die Schicht S eine anorganische Beschichtung aus Lithium-Kalium-Polysilikaten ist, welche aus einer wässrigen Lösung von Lithium-Kalium-Polysilikaten aufgebracht ist.

Die Unteransprüche geben bevorzugte Ausführungsformen der Erfindung an.

Es wurde gefunden, daß durch die Kombination der modifizierten Schicht Z mit einem Primer in dem Schichtaufbau der Folie die Barriereeigenschaften der erfindungsgemäßen Folien wesentlich verbessert werden können. Insbesondere wird die Sauerstoffbarriere gegenüber analogen Schichtaufbauten ohne Primer weiter erhöht. Und die Sauerstoffbarriere der erfindungsgemäße Folie zeigt wesentlich weniger Schwankungen, insbesondere bei der Verarbeitung der Folie zum Verbund oder bei anderen mechanischen Beanspruchungen oder bei schwankender Luftfeuchtigkeit. Die erfindungsgemäße Folie zeigt wesentlich bessere Barriereeigenschaften im Vergleich zu Basisfolien, welche eine übliche -nicht modifiziertepolyolefinische Zwischenschicht und einen Primer aufweisen. Offensichtlich entsteht durch die Kombination aus Maleinsäureanhydrid modifizierter Schicht und Primerschicht ein synergistischer Effekt, der sich besonders vorteilhaft auf die Sauerstoffbarriere der Polysilikatschicht und deren Beständigkeit bei verschiedenen Belastungen auswirkt.

Die Schicht Z des erfindungsgemäßen Folienaufbaus kann als eine Zwischenschicht des gesamten Folienaufbaus (Folie mit Silikatbeschichtung) angesehen werden. Sie ist gleichzeitig Deckschicht der coextrudierten Grundfolie aus Basisschicht, Schicht Z und gegebenenfalls weiteren Schichten (Folie ohne Primer und Silikatbeschichtung). Im allgemeinen ist diese Zwischenschicht Z direkt auf der Basisschicht B der Folie aufgebracht. Es sind jedoch auch Ausführungsformen denkbar, welche zwischen der Basisschicht B und der Schicht Z weitere Schichten aufweisen. Im allgemeinen werden die Basisschicht B und die Zwischenschicht Z, gegebenenfalls zusammen mit weiteren Schichten, coextrudiert. Die Zwischenschicht Z bildet somit eine äußere Deckschicht der coextrudierten Grundfolie, die anschließend mit Primer und Polysilikatbeschichtung beschichtet wird. Diese Grundfolie kann in einer bevorzugten Ausführungsform eine zweite Deckschicht, vorzugsweise ein siegelfähige zweite Deckschicht, auf der gegenüberliegenden Seite aufweisen.

Die Schicht Z enthält im allgemeinen mindestens 50 Gew.-%, vorzugsweise 70 bis 100 Gew.-%, insbesondere 80 bis <100 Gew.-%, jeweils bezogen auf die Zwischenschicht, eines Maleinsäureanhydrid modifizierten Polyolefins. Neben diesem modifizierten Polyolefin können weitere Bestandteile der Zwischenschicht nicht modifizierte polyolefinische Polymere sein, welche nur aus Ethylen-, Propylen- oder Butyleneinheiten aufgebaut sind. Diese zusätzlichen Polyolefine sind in einer Menge von 0 bis 30 Gew.-%, insbesondere >0 bis 20 Gew.-%, jeweils bezogen auf die Zwischenschicht enthalten. Gegebenenfalls enthält die Zwischenschicht zusätzlich übliche Additive in jeweils wirksamen Mengen.

Maleinsäureanhydrid modifizierte Polyolefine sind Polyolefine, die durch den Einbau von Maleinsäureeinheiten hydrophilisiert werden. Als Basispolyolefine können verschiedenste Propylenpolymere oder Ethylenpolymere verwendet werden, wobei Polyethylene, Propylenhomopolymere, Propylencopolymere und Propylenterpolymere als Basispolymer bevorzugt sind. Insbesondere sind Maleinsäureanhydrid modifizierte Polypropylene bevorzugt. Zur Herstellung der modifizierten Polypropylene werden die Basispolymeren mit Maleinsäureanhydrid gepfropft. Die entsprechenden Herstellverfahren sind beispielsweise im US Patent 3,433,777 und US Patent 4,198,327 beschrieben, auf welche hiermit ausdrücklich Bezug genommen wird. Die Dichte nach ASTM D 1505 der modifizierten Polyolefine liegt vorzugsweise in einem Bereich von 0,89 bis 0,92 g/cm³, insbesondere 0,9 g/cm³, der Vicat-Erweichungspunkt nach ASTM 1525 liegt in einem Bereich von 120 bis 150°C, insbesondere 140 bis 145°C, die Shore-Härte nach ASTM 2240 beträgt 55 bis 70, vorzugsweise 67°C und der Schmelzpunkt nach ASTM D 2117 liegt in einem Bereich von 150 bis 165°C, vorzugsweise 155 bis 160°C. Der Maleinsäureanteil im modifizierten Polyolefin liegt im allgemeinen unter 5 Gew.-% bezogen auf das modifizierte Polyolefin, vorzugsweise im Bereich von 0,05 bis 3 Gew.-%, insbesondere 0,1 bis 1Gew.-%. Der Schmelzflußindex beträgt im allgemeinen 1 bis 30g/10min, vorzugsweise 3 bis 20g/10min. Derartige Maleinsäureanhydrid modifizierte Polypropylene sind im Stand der Technik bekannt und kommerziell erhältlich und werden beispielsweise unter den Handelsnamen Polybond und Priex verkauft.

Nachstehend werden die Polyolefine, die als Basispolymer für die Modifizierung mit Maleinsäureanhydrid verwendet werden, näher beschrieben. Diese Polymere sind ebenso als weiterer Bestandteil (als nicht modifizierte olefinische Polymere) in der Zwischenschicht Z zur Abmischung der modifizierten Polyolefine geeignet.

Polyolefine sind beispielsweise Polyethylene, Polypropylene, Polybutylene oder Mischpolymerisate aus Olefinen mit zwei bis acht C-Atomen, worunter Polyethylene und Polyproyplene bevorzugt sind.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen und Butylen. Die Angaben in Gew.-% beziehen sich jeweils auf das Propylenhomopolymere.

Gegebenenfalls können isotaktische Propylenhomopolymere mit einem Schmelzpunkt von 140 bis 170 °C, vorzugsweise von 155 bis 165°C, und einen Schmelzflußindex (Messung DIN 53 735 bei 21,6 N Belastung und 230 °C) von 1,0 bis 10 g/10 min, vorzugsweise von 1,5 bis 6,5 g/10 min eingesetzt werden. Der n-heptanlösliche Anteil der isotaktischen Propylenhomopolymeren beträgt im allgemeinen 1 bis 10 Gew.-%, vorzugsweise 2-5 Gew.-% bezogen auf das Ausgangspolymere.
Polyolefine können auch Co- oder Terpolymere, vorzugsweise Copolymere von Ethylen und Propylen oder Ethylen und Butylen oder Propylen und Butylen oder Terpolymere von Ethylen und Propylen und Butylen oder Mischungen aus zwei oder mehreren der genannten Co- und Terpolymeren sein. Hierunter sind Mischpolymerisate bevorzugt, welche zum überwiegenden Teil, beispielsweise >70 Gew.-%, aus Propyleneinheiten aufgebaut sind.

Insbesondere sind statistische Ethylen-Propylen-Copolymere mit einem Ethylengehalt von 1 bis 10 Gew.-% oder statistische Propylen-Butylen-1-Copolymere mit einem Butylengehalt von 2 bis 25 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, und einem Butylen-1-Gehalt von 2 bis 20 Gew%, jeweils bezogen auf das Gesamtgewicht des Terpolymeren, oder ein Blend aus Ethylen-Propylen-Butylen-1-Terpolymeren und Propylen-Butylen-1-Copolymeren, wobei das Blend einen Ethylengehalt von 0,1 bis 7 Gew.-%, eine Propylengehalt von 50 bis 90 Gew.-% und einem Butylen-1-Gehalt von 10 bis 40 Gew.-%, jeweils bezogen auf das Gesamtgewicht des Polymerblends, aufweist.

Die vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Die Molekulargewichtsverteilung der vorstehend beschriebenen Polyolefine kann je nach Anwendungsgebiet in breiten Grenzen variieren. Das Verhältnis des Gewichtsmittels M_{w} zum Zahlenmittel Mₙ liegt im allgemeinen zwischen 1 und 15, vorzugsweise im Bereich von 2 bis 10. Eine derartig Molekulargewichtsverteilung - erreicht man beispielsweise durch peroxidischen Abbau oder durch Herstellung des Polyolefins mittels geeigneter Metallocenkatalysatoren.

Die Zwischenschicht kann gegebenenfalls zusätzlich übliche Additive, vorzugsweise Antiblockmittel, Neutralisationsmittel und Stabilisatoren in jeweils wirksamen Mengen enthalten.

Die Dicke der Zwischenschicht aus modifiziertem Polyolefin ist im allgemeinen größer als 0,1 µm und liegt vorzugsweise im Bereich von 0,3 bis 3 µm, insbesondere 0,4 bis 1,5 µm.

Die Basisschicht B der Polyolefinfolie ist grundsätzlich aus den vorstehend beschriebenen Polyolefinen aufgebaut, worunter die vorstehend beschriebenen Propylenhomopolymere bevorzugt sind, insbesondere isotaktische Propylenhomopolymere. Im allgemeinen enthält die Basisschicht mindestens 70 bis 100 Gew.-%, vorzugsweise 80 bis <100 Gew.-% Polyolefin bzw. Propylenpolymer. Des weiteren sind in der Basisschicht üblicherweise Neutralisationsmittel und Stabilisatoren, sowie gegebenenfalls weitere übliche Additive in jeweils wirksamen Mengen enthalten. Für opake oder weiß-opake Ausführungsformen der Folie enthält die Basisschicht zusätzlich vakuoleninitüerende Füllstoffe und/oder Pigmente. Art und Menge der Füllstoffe sind im Stand der Technik bekannt.

Auf die vorstehend beschriebene Zwischenschicht wird nach der Herstellung der coextrudierten Grundfolie der Haftvermittler oder Primer aufgetragen. Geeignete Primer basieren auf statistischen Vinyl-Polymeren, welche sich von "Vinyl" Monomeren wie z.B. Vinylalkohol, Vinylacetat, Vinyl-Phenol etc. ableiten. Geeignete Primer, sowie die Zusammensetzung der Primerlösungen als auch die Verfahren zur Auftragung des Primers sind im einzelnen in PCT/US97/10073 (Veröffentlichungsnummer WO 97/47678, Seite 3, Zeile 24 bis Seite 8 Zeile 16) beschrieben. Auf diese Beschreibung wird hiermit ausdrücklich Bezug genommen.

Im Rahmen der vorliegenden Erfindung sind Polyvinylalkohole (PVOH) als Primer besonders bevorzugt. PVOH Primer sind an sich im Stand der Technik bekannt und kommerziell erhältlich. PVOH wird zur Verbesserung der Bedruckbarkeit von orientierten Polypropylenfolien seit langem eingesetzt. PVOH wird durch Polymerisation von Vinylacetaten und anschließender Hydrolyse der Acetatfunktionen hergestellt, wobei je nach Hydrolysegrad noch gewisse Anteile an Acetatfunktionen erhalten bleiben. Der Hydrolysegrad beträgt im allgemeinen mindesten 80%, vorzugsweise 85 bis <100%.

Zur Auftragung des Primers wird PVOH in geeigneten Lösemitteln, wie z.B. Wasser oder Alkohole, wie z.B. Propanole, Ethanol, Methylalkohol oder Mischung daraus, gelöst, wobei der PVOH-Gehalt im allgemeinen zwischen 0,1 bis 15 Gew.-%, vorzugsweise 2 bis 10 Gew.-%, bezogen auf das Gewicht der Lösung liegt. Aus dieser Lösung wird der Primer mittels an sich bekannter Beschichtungsverfahren auf die Oberfläche der modifizierten Zwischenschicht Z aufgetragen und anschließend getrocknet. Die PVOH-Schicht ist nicht vernetzt.

Im allgemeinen ist es vorteilhaft die Oberfläche der Zwischenschicht Z vor dem Auftrag des Primers zwecks Erhöhung der Oberflächenspannung mittels geeigneter Methoden einer Oberflächenbehandlung zu unterwerfen. Geeignet ist beispielsweise eine Corona oder Flammbehandlung, gegebenenfalls können auch Plasmaverfahren zur Vorbehandlung eingesetzt werden.

Nach dem Aufbringen der Primerschicht wird die Folie in an sich bekannter Weise mit einer Polysilikatbeschichtung versehen. Verfahren zur Aufbringung der Polysilikate aus wässriger Lösung, sowie die Zusammensetzung der Lösung und weitere Einzelheiten sind beispielsweise in PCT 97/44379, EP 0 900 250, EP 0 906 373, PCT 97/47694 beschrieben, auf welche hiermit ausdrücklich Bezug genommen wird.

Die Polysilikatbeschichtung wird auf die Folienseite mit der Primer Schicht aufgetragen (d.h. auf die Oberfläche der Primerschicht), wobei die Auftragung aus einer wässrigen Polysilikatlösung erfolgt. Für die Zwecke der vorliegenden Erfindung sind Alkalimetall-Polysilicate, wie z.B. Lithium- und Kalium-Copolysilicat enthaltende wässrige Lösungen besonders geeignet. Die Beschichtungslösung enthält vorzugsweise ein Copolysilicat, d.h. ein Gemisch aus zwei verschiedenen Alkalimetall-Polysilicaten, beispielsweise eine Mischung von Lithium- und Kalium-Copolysilicaten der allgemeinen Formel (Li₂O)ₓ(K₂O)₁₋ₓ(SiO₂)_{y}, in der x die Molfraktion von Li₂O und y das Molverhältnis SiO₂:M₂O ist (M₂O steht für die Summe aus Li₂O und K₂O). In den Copolysilikaten liegt der Wert für X zwischen 0 und 1 und kann innerhalb dieses Bereiches variieren. Besonders bevorzugt sind Copolysilikate, welche in etwa äquimolare Mengen von Li₂O und K₂O oder eine höhere Menge an Li₂O aufweisen, d.h. Copolysilikate mit einem X Wert von 0,4 bis <1, mit einem bevorzugten X-Wert von etwa 0,5 bis 0,7. Der SiO₂ Anteil dieser Copolysilikate wird über den Y-Wert festgelegt und beträgt im allgemeinen 1 bis 10, vorzugsweise 4,6 bis 10. Somit sind Copolysilikate der vorstehenden Formel bevorzugt, welche gleichzeitig 0 < X <1, vorzugsweise 0,4 ≤ X ≤ 0,7 und Y = 1 bis 10, vorzugsweise 4,6 bis 10 erfüllen.. Erfüllen.

Die Polysilikatiösungen können zur Verringerung der Oberflächenspannung zusätzlich ein geeignetes Tensid enthalten, wobei nichtionische Tenside, insbesondere Acetylenglycole und Alkylethoxylate, bevorzugt sind. Die Menge an Tensid kann je nach verwendetem Tensid angepaßt werden und liegt vorzusgweise unter 1 Gew.-%, vorzugsweise im Bereich von 0,01 bis 0,5 Gew.-% bezogen auf die wässrige Lösung.

Die zur Beschichtung eingesetzte Polysilikat Lösung ist bevorzugt farblos oder transparent und kann aus handelsüblichen Lithiumpolysilicat- und Kaliumpolysilicat-Lösungen hergestellt werden. Zum Beispiel kann eine im Handel erhältliche kolloidale Suspension von Lithiumpolysilicat mit einer handelsüblichen kolloidalen Suspension von Kaliumpolysilicat zur Herstellung erfindungsgemäßer Beschichtungslösungen vermischt werden. Geeignet ist beispielsweise eine wäßrige, kolloidale Suspension von Lithiumpolysilicat mit ca. 25 Gewichtsprozent Siliciumdioxid und ca. 3,0 Gewichtsprozent Lithiumoxid enthält. Eine zweite handelsübliche wäßrige, kolloidale Suspension enthält ca. 26,8 Gewichtsprozent Siliciumdioxid und ca. 13 Gewichtsprozent Kaliumoxid. Diese Produkte werden dann bis zum Erreichen des gewünschten Feststoffgehalts mit Wasser gemischt.

Das mit y bezeichnete Molverhältnis von SiO₂:M₂O der getrockneten Beschichtungen läßt sich durch die Molverhältnisse SiO₂:Li₂O und SiO₂:K₂O der Ausgangslösungen einstellen. Eine Variation des Molverhältnisses ist beispielsweise auch durch Zugabe von kolloidalem Siliciumdioxid zur wäßrigen Beschichtungslösung möglich. Der Feststoffgehalt der Beschichtungslösungen beträgt im allgemeinen bis zu 25 Gew.-%, vorzugsweise 1 bis 20 Gew.-% und hängt vom verwendeten Beschichtungsverfahren und von der gewünschten Schichtdicke der Polysilikatbeschichtung nach dem Trocknen ab. Die Schichtdicke soll nach dem Trocknen zum Beispiel zwischen 100 und 500 nm liegen, vorzugsweise 200 - 300 nm betragen. Die Einstellung der Schichtdicke ist nach dem heutigen Stand der Technik ohne weiteres möglich [siehe zum Beispiel das kanadische Patent Nr. 993,738].

Die Beschichtungslösungen werden nach dem Zusammenfügen der verschiedenen Komponenten gerührt und gegebenenfalls filtriert. In dieser Phase kann zur Verringerung der Oberflächenspannung der Beschichtungslösung wahlweise ein Tensid zugesetzt werden. In Betracht kommen zum Beispiel das handelsübliche Genapol^{®} 26-L-60N, ein nichtionisches Tensid von Hoechst Celanese oder andere Tenside wie zum Beispiel Genapol^{®} UD050 (Hoechst) und Dynol 604^{®}. Die Lösung wird dann mittels geeigneter Verfahren auf die Folienoberfläche aufgebracht.

Geeignete Beschichtungsverfahren sind z.B. das Walzenauftragen, das Sprühbeschichten und die Tauchbeschichtung. Beim Walzenauftragen kommen unter anderem Rakelbeschichtung, Umkehr-Walzenbeschichtung, Direkt-Walzenbeschichtung, Beschichten mit der Luftmesser-Streichmaschine, Walzenrakelstreichmaschine und Glättschaberstreichanlage, das Gravurstreichverfahren und Beschichten mit einer Breitschlitzdüse in Betracht. Allgemeine Beschreibungen dieser Beschichtungsverfahren finden sich in der Literatur, zum Beispiel in Modern Coating and Drying Techniques (Herausgeber E. Cohen und E. Gutoff; VCH Publishers, New York 1992) und Web Processing and Converting Technology and Equipment (Herausgeber D. Satas, Van Nostrand Reinhold, New York 1984). Die vorliegende Erfindung ist nicht auf bestimmte Beschichtungsverfahren der Polysilikatbeschichtung beschränkt. Die jeweilige Methode kann unter den genannten und unter anderen in Fachkreisen bekannten Verfahren ausgewählt werden.

Nach dem Beschichten mit der wässrigen Polysilikatlösung muß die beschichtete Folie bei einer gewählten Temperatur getrocknet werden (Raumtemperatur oder höhere Temperatur). Die Wahl dieser Temperatur hängt von der gewünschten Trocknungsdauer ab. Kürzere Trocknungszeiten lassen sich mit hohen Temperaturen erreichen, auf die verzichtet werden kann, wenn eine längere Trocknungsdauer in Frage kommt. Geeignete Temperaturen können im Bereich von 25 bis 200°C, vorzugsweise 40 bis 150°C und insbesondere im Bereich von 70 bis 120°C liegen.

Die Gesamtdicke des erfindungsgemäßen Folienaufbaus, d.h. einschließlich Primer und Silikatbeschichtung, kann innerhalb weiter Grenzen variieren und richtet sich nach dem beabsichtigten Einsatz. Sie beträgt vorzugsweise 4 bis 100µm, insbesondere 5 bis 80µm, vorzugsweise 10 bis 50 µm, wobei die Basisschicht etwa 40 bis 100 % der Gesamtfoliendicke ausmacht.

In einer weiteren besonders vorteilhaften Ausführungsform wird die Polyolefinfolie zur Herstellung eines Laminats verwendet. Hierbei ist es erfindungswesentlich, daß die polysilikatbeschichtete Seite der Folie gegen eine weitere Folie laminiert wird. Die Laminierung kann aber auch mittels Extrusionkaschierung erfolgen, besonders vorteilhaft ist die Kaschierung gegen eine weitere Folien mit Hilfe von Kaschierklebern. Hierbei hat sich insbesondere die Kaschierung gegen eine Polyethylenfolie bewährt. Als Polyethylenfolie sind grundsätzlich die üblichen PE Kaschierfolien geeignet. Geeignet sind beispielsweise handelsübliche lösemittelfreie Kaschierkleber.

Die erfindungsgemäße Folie zeichnet sich durch eine hervorragende Sauerstoffbarriere aus, welche zusätzlich gegenüber den verschiedensten Belastungen sehr stabil ist. Im Rahmen der vorliegenden Erfindung wurde gefunden, daß ausgehend von an sich bekannten silikatbeschichteten Folien die Sauerstoffbarriere noch weiter entscheidend durch das ausgewählte zu beschichtende Substrat verbessert werden kann. Hierbei kommt es jedoch nicht nur auf die Grundfolie selbst, sondern auch auf den ausgewählten Primer an. Die vorliegende Erfindung beruht somit auf einer synergistische Wirkung von drei Komponenten, der Silikatbeschichtung, dem Primer und der modifizierten Grundfolie.

Die Erfindung betrifft weiterhin ein Verfahren zur Herstellung des erfindungsgemäßen Folienaufbaus. Im Rahmen dieses Verfahrens wird zunächst separat die biaxial orientierte Grundfolie mittels Coextrusion und anschließender biaxialer Verstreckung hergestellt. Diese Grundfolie umfaßt mindestens die vorstehend beschrieben Basisschicht und Zwischenschicht und im allgemeinen eine weitere Schicht auf der gegenüberliegenden Seite der Basisschicht, sowie gegebenenfalls weitere Schichten, so daß drei, vier und fünfschichtige Folienaufbauten der Grundfolie resultieren. Wesentlich ist, daß die vorstehend beschriebene Zwischenschicht eine äußere Deckschicht der Grundfolie bildet.

Die Grundfolie wird durch Coextrusion, vorzugsweise nach dem Stenterverfahren hergestellt. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gestreckt (orientiert), die gestreckte Folie thermofixiert und gegebenenfalls an der zur Behandlung vorgesehenen Oberflächenschicht corona- oder flammbehandelt wird.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die simultane Streckung kann im Flachfolienverfahren oder im Blasverfahren ausgeführt werden. Die weitere Beschreibung der Folienherstellung erfolgt am Beispiel einer Flachfolienextrusion mit anschließender sequentialer Streckung.

Bei der Extrusion werden die Polymere oder die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt. Die Temperatur der Abzugswalze liegt im allgemeinen in einem Bereich von 10 bis 100 °C, vorzugsweise 20 bis 50°C.

Die so erhaltene Vorfolie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung bei 80 bis 130°C und die Querstreckung vorzugsweise bei 120 bis 170°C durchgeführt.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Der PVOH Primer wird nach an sich bekannten Verfahren auf die Oberfläche der modifizierten Deckschicht Z aufgebracht. Für die anschließende Beschichtung mit den Polysilikaten werden grundsätzlich die gleichen bekannten Verfahren angewendet. Derartige bekannte Verfahren sind beispielsweise Walzenauftragsverfahren, insbesondere Reverse-Gravur-Verfahren, Sprayverfahren, Tauchverfahren. Eine allgemeine Beschreibung der verschiedenen einsetzbaren Beschichtungsverfahren findet sich in E. Cohen und E. Gutoff eds VCH-Verlag New York 1992 (Modem Coating and drying technics).

Die Erfindung wird nun durch Ausführungsbeispiele noch weiter erläutert:

### Herstellung der Grundfolie

### Beispiel 1

Es wurde durch Coextrusion und anschließende stufenweise Orientierung in Längs- und Querrichtung eine transparente, dreischichtige Folie mit Aufbau A/B/Z und einer Gesamtdicke von 30 µm hergestellt. Die Deckschicht A hatte eine Dicke von jeweils 0,7µm, die Dicke der Schicht Z betrug 0,7µm. Die Folie wurde auf der Oberfläche der Schicht Z mittels Corona vorbehandelt.

| Basisschicht (B): | |
|---|---|
| ca.100 Gew.-% | isotaktisches Propylenhomopolymer mit einem Schmelzpunkt von 166 °C und einem Schmelzflußindex von 3,3 g/10min |

| Deckschicht: Z | |
|---|---|
| ca.100 Gew.-% | Maleinsäureanhydrid gepropftes isotaktisches Propylenhomopolymer mit einem Schmelzpunkt von 157°C und einem Schmelzflußindex von 7 g/10min |

| Deckschicht: A | |
|---|---|
| ca. 100 Gew.-% | Propylen-Terpolymer (C2C3C4) mit einem Schmelzpunkt von 133°C und einem Schmelzflußindex von 6 g/10min und einem Ethylengehalt von ca. 2 Gew.-% und einem Butylengehalt von ca. 9 Gew.-%. |

Alle Schichten erhielten Stabilisatoren und Neutralisationsmittel in üblichen Mengen.

Die Herstellungsbedingungen in den einzelnen Verfahrensschritten waren:

| Extrusion: | | | |
|---|---|---|---|
| Temperaturen | Basisschicht B: | 260 °C | |
| | Schicht A: | 255 °C | |
| | Schicht Z: | 250°C | |
| | Temperatur der Abzugswalze: | | 20 °C |
| Längsstreckung: | Temperatur: | | 105 °C |
| | Längsstreckverhältnis: | | 4,5 |
| Querstreckung: | Temperatur: | | 170 °C |
| | Querstreckverhältnis: | | 8 |
| Fixierung: | Temperatur: | | 145 °C |
| Konvergenz: | | | 2% |

Die biaxial orientierte Folie besitzt eine unmittelbar nach der Herstellung eine Oberflächenspannung von 42 mN/m auf der vorbehandelten Oberfläche der Schicht Z. Die Folie ist transparent und weißt eine Sauerstoffbarriere von ca. 1800cm³/m² * Tag * bar bei 23°C und 50% rel. Feuchte auf.

### Beispiel 2 (Vergleichsbeispiel)

Es wurde eine Folie wie in Beispiel 1 beschrieben hergestellt, wobei im Unterschied zum Beispiel 1 die Schicht Z aus einem üblichen Propylen-Ethylen-Coplymeren aufgebaut war. Die Zusammensetzung der übrigen Schichten und die Verfahrensbedingungen aus Beispiel 1 wurden nicht geändert.

| Schicht Z: | |
|---|---|
| Ca. 100 Gew.-% | Propylen-Ethylencopolymer (C2C3) mit einem Schmelzpunkt von 135°C und einem Schmelzflußindex von 6 g/10min und einem Ethylengehalt von ca. 4 Gew.-% |

Die Oberflächenspannung dieser Folie betrug auf der vorbehandelten Z Seite 40mN/m. Die Folie ist transparent und weißt eine Sauerstoffbarriere von ca. 1800cm³/m² * Tag * bar bei 23°C und 50% rel. Feuchte auf.

### Herstellung der beschichteten Folien

Die Grundfolien nach dem Beispiel und dem Vergleichsbeispiel wurde auf der Oberfläche der jeweiligen Deckschicht Z mit einem PVOH Primer versehen und anschließend gemäß der vorliegenden Erfindung mit einer wässrigen Silikatlösung beschichtet. Im Vergleich hierzu wurde die wässrige Silikatlösung direkt, d.h. ohne Primer, auf die jeweilige Deckschicht Z der verschiedenen Grundfolie, aufgebracht.

### Beispiel 3 (Vergleichsbeispiel)

Die Folie mit modifizierter Deckschicht Z nach Beispiel 1 wurde auf der vorbehandelten Oberfläche der modifizierten Deckschicht Z mit PVOH beschichtet.

### Beispiel 4 (Vergleichsbeispiel)

Die Folie mit Copolymer-Deckschicht Z nach Beispiel 2 wurde mit PVOH beschichtet.

### Beispiel 5 (Vergleichsbeispiel)

Die Folie mit modifizierter Deckschicht Z nach Beispiel 1 wurde direkt (ohne PVOH-Primer) auf der vorbehandelten Oberfläche der Schicht Z mit einer wässrigen Polysilikatlösung beschichtet.

### Beispiel 6 (Vergleichsbeispiel)

Die Folie mit Copolymer-Deckschicht nach Beispiel 2 wurde direkt (ohne PVOH-Primer) auf der vorbehandelten Oberfläche der Schicht Z mit einer wässrigen Polysilikatlösung beschichtet.

### Beispiel 7 (erfindungsgemäßes Beispiel)

Die Folie mit modifizierter Deckschicht und PVOH-Primer nach Beispiel 3 wurde auf der geprimerten Oberfläche mit einer Polysilkatlösung beschichtet.

### Beispiel 8 (Vergleichsbeispiel)

Die Folie mit Copolymer-Deckschicht und PVOH-Primer nach Beispiel 4 wurde auf der geprimerten Oberfläche mit einer Polysilkatlösung beschichtet.

Die beschichteten Folien nach dem Beispielen 5 bis 8 wurden zusätzlich mittels eines Kaschierklebers mit einer Polyethylenfolien mit einer Dicke von 50µm kaschiert (laminiert). Die Kaschierung erfolgte gegen die Polysilikatbeschichtung. Zusätzlich wurden die Barriereeigenschaften der kaschierten Folien untersucht.

**Tabelle 1**

| Beispiel | MAH-modifizierte Schicht | Primer | Auftragsgewicht Primer g/m² trocken | Polsilikat-Beschichtung (Silguard ®) | Auftragsgewicht Polsilikat-Beschichtung g/m² trocken | Ob-barriere [cm³/m²* Tag] bei 23°C/ 50% rel. Feuchte | O₂-Barriere nach PE Kaschierung [cm³/m² * Tag] bei 23°C/50% rel. Feuchte | |
|---|---|---|---|---|---|---|---|---|
| B1 | Ja | - | 0 | - | 0 | 1800 | - | Grundfolie erfindungsgemäß |
| VB 2 | - | - | 0 | - | 0 | 1800 | - | Grundfolie mit Standard |
| VB 3 | Ja | PVOH | ca. 0,4 | - | 0 | 1,83 | 0,76 | Grundfolie erfindungsgemäß |
| VB 4 | - | PVOH | ca. 0,4 | - | 0 | >200 | >200 | Grundfolie mit Standard |
| VB 5 | Ja | - | 0 | Ja | ca. 0,8 | 4,72 | 12,4 | Grundfolie erfindungsgemäß. |
| VB 6 | - | - | 0 | Ja | ca. 0,8 | >200 | 35 | Grundfolie, mit Standard |
| **B 7** | **Ja** | **PVOH** | **ca. 0,4** | **Ja** | **ca. 0,8** | **<1** | **0,5** | **Grundfolie erfindungsgemäß** |
| VB 8 | - | PVOH | ca. 0,4 | Ja | ca. 0,8 | 6,41 | 1,46 | Grundfolie mit Standard |

| | | | | | | | | |
|---|---|---|---|---|---|---|---|---|
| VB Vergleichsbeispiel, keine erfindungsgemäße Ausführungsform | | | | | | | | |

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 □C gemessen.

### Schmelzpunkt

DSC-Messung, Maximum der Schmelzkurve, Aufheizgeschwindigkeit 20 □C/min.

### Verbundhaftung

Die Verbundfestigkeit wurde an Verbunden im gesiegelten und ungesiegelten Zustand gemessen. Die hierbei angewendeten Siegelbedingungen waren Kontaktzeit t = 0,5s, Siegeltemperatur ϑ = 150°C und Siegeldruck p = 13,8 N/cm². Die Verbundhaftung wurde an 15mm breiten Streifen gemessen und wird in N/15mm angegeben.

### Sauerstoffbarriere

Die Sauerstoffdurchlässigkeit wurde nach dem sauerstoffspezifischem Trägergasverfahren, DIN 53380-3 bzw. ASTM D 3985, bei 23°C und 50% relativer Feuchte gemessen.

## Patentansprüche

1. Beschichtete, coextrudierte, biaxial verstreckte Polyolefinfolie, welche mindestens eine Basisschicht B aus Polyolefinen und eine Deckschicht Z aus Maleinsäureanhydrid modifizierten Polyolefinen umfaßt, **dadurch gekennzeichnet, daß** auf der Oberfläche der Deckschicht Z eine Beschichtung aus einem Primer aufgebracht ist, welche die Primerschicht P bildet und auf der Oberfläche der Primerschicht P eine anorganische Beschichtung aus Lithium-Kalium-Polysilikaten aufgebracht ist, welche eine Polysilikatschicht bildet.

2. Polyolefinfolie nach Anspruch 1, **dadurch gekennzeichnet, daß** die coextrudierte und biaxial verstreckte Grundfolie auf der der Schicht Z gegenüberliegenden Seite eine weitere Deckschicht aufweist.

3. Polyolefinfolie nach einem der Ansprüche 1 bis 2, **dadurch gekennzeichnet, daß** die Polysilikatbeschichtung aus einer wässrigen Lösung von Lithium- und Kalium-Polysilikaten aufgebracht ist.

4. Polyolefinfolie nach einem der Ansprüche 1 bis 3, **dadurch gekennzeichnet, daß** die Polysilikatbeschichtung eine Mischung aus Lithium- und Kaliumpolysilikat der allgemeinen Formel (Li₂O)X(K₂O)₁₋ₓ(SiO₂)_{y} ist, in der x die Molfraktion von Li₂O und y das Molverhältnis SiO₂:M₂O ist und x = 0,4 bis <1 und y = 1 - 10 beträgt.

5. Polyolefinfolie nach einem der Ansprüche 1 bis 4, **dadurch gekennzeichnet, daß** die Primerschicht eine Schicht aus PVOH ist.

6. Polyolefinfolie nach einem der Ansprüche 1 bis 5, **dadurch gekennzeichnet, daß** das PVOH einen Hydrolysgrad von 85 bis <100% aufweist.

7. Polyolefinfolie nach einem der Ansprüche 1 bis 6, **dadurch gekennzeichnet, daß** die Schicht Z 80 bis 100 Gew.-% eines maleinsäureanhydrid gepropften Polypropylen-Homopolymer, Propylencopolymer oder Polyethylen enthält.

8. Polyolefinfolie nach einem der Ansprüche 1 bis 7, **dadurch gekennzeichnet, daß** das maleinsäureanhydrid gepropfte Polypropylen-Homopolymer, Propylencopolymer oder Polyethylen einen Maleinsäureanhydridgehalt von 0,05 - 3 Gew.-% bezogen auf das Gewicht des Polymeren, aufweist.

9. Polyolefinfolie nach einem der Ansprüche 1 bis 8, **dadurch gekennzeichnet, daß** das maleinsäureanhydrid gepropfte Polypropylen-Homopolymer, Propylencopolymer oder Polyethylen einen Schmelzpunkt von 150 bis 165°C und einen Vicat-Erweichungspunkt von 120 - 150°C aufweist.

10. Polyolefinfolie nach einem der Ansprüche 1 bis 9, **dadurch gekennzeichnet, daß** das die Schicht Z zusätzlich >0 bis 30 Gew.-% nichtmodifizierte olefinische Polymere aus Propylen-, Ethylen- oder Buteneinheiten, enthält, vorzugsweise Polyethylen, Polypropylen, Propylenterpolymere und Propylencopolymere.

11. Polyolefinfolie nach einem der Ansprüche 1 bis 10, **dadurch gekennzeichnet, daß** die Grundfolie auf der gegenüberliegenden Oberfläche der Basisschicht eine weitere Deckschicht aus siegelfähigen polyolefinischen Polymeren aufweist.

12. Polyolefinfolie nach einem der Ansprüche 1 bis 11, **dadurch gekennzeichnet, daß** die Schicht Z eine Schichtdicke von 0,3 bis 3µm aufweist.

13. Polyolefinfolie nach einem der Ansprüche 1 bis 12, **dadurch gekennzeichnet, daß** zuerst eine Grundfolie nach dem Coextrusionsverfahren hergestellt wird, welche mindestens die Basisschicht B und die Schicht Z umfaßt und anschließend die Oberfläche der Schicht Z mit PVOH beschichtet wird und anschließend auf der PVOH Beschichtung eine Polysilikatbeschichtung aufgebracht wird.

14. Polyolefinfolie nach einem der Ansprüche 1 bis 13, **dadurch gekennzeichnet, daß** die coextrudierte Grundfolie weitere coextrudierte Schichten aufweißt und die Grundfolie eine dreischichtige, vierschichtige oder fünfschichtige Grundfolie ist und die weiteren Schichten aus Polyolefinen aufgebaut sind.

15. Polyolefinfolie nach einem der Ansprüche 1 bis 13, **dadurch gekennzeichnet, daß** die coextrudierte Grundfolie eine dreischichtige Folie mit einer siegelfähigen Deckschicht auf der gegenüberliegenden Seite der Basisschicht ist, welche aus Propylencopolymeren oder Propylenterpolymeren aufgebaut ist.

16. Polyolefinfolie, nach einem der Ansprüche 1 bis 15, **dadurch gekennzeichnet, daß** die Polyolefinfolie eine Sauerstoffdurchlässigkeit bei 23°C und 50% relativer Luftfeuchte von weniger als 1 cm³/m² * Tag * bar aufweist.

17. Laminat aus einer beschichteten Polyolefinfolie nach einem der Ansprüche 1 bis 16, **dadurch gekennzeichnet, daß** die Polyolefinfolie mittels Kaschierkleber mit einer Polyethylenfolien zu einem Laminat kaschiert wird, wobei die Laminierung gegen die polysilikatbeschichtete Seite erfolgt.

18. Laminat nach Anspruch 17 **dadurch gekennzeichnet, daß** das Laminat eine Sauerstoffdurchlässigkeit bei 23°C und 50% relativer Luftfeuchte von weniger als 0,5 cm³/m² * Tag * bar aufweist.

19. Laminat nach einem der Ansprüche 17 oder 18, **dadurch gekennzeichnet, daß** zur Laminierung ein lösemittelfreier Kaschierkleber verwendet wird.

20. Verfahren zur Herstellung einer beschichteten Folie, **dadurch gekennzeichnet daß** man eine coextrudierte, biaxial verstreckte Folie herstellt, die eine Basisschicht B und eine erste Deckschicht Z und eine zweite Deckschicht aus siegelfähigen Polyolefinen aufweist, wobei die Schicht Z aus Maleinsäureanhydrid gepfropftem Polyolefin aufgebaut ist und die Oberfläche der Schicht Z mit einer PVOH Beschichtung versehen wird und auf die Oberfläche der PVOH Beschichtung eine Polysilikatbeschichtung aus wässriger Lösung aufgetragen wird.

## Claims

1. A coated, coextruded, biaxially oriented polyolefin film comprising at least a base layer B of polyolefins and one top layer Z of maleic anhydride-modified polyolefins, **characterized in that** a coating consisting of a primer is applied to the surface of top layer Z, said coating forming the primer layer P, and an inorganic coating of lithium-potassium polysilicates is applied to the surface of primer layer P, said inorganic coating forming a polysilicate layer.

2. A polyolefin film according to claim 1, **characterized in that** the coextruded and biaxially oriented base film has a further top layer on the opposite side of layer Z.

3. A polyolefin film according to any of claims 1 to 2, **characterized in that** the polysilicate coating is applied from an aqueous solution of lithium and potassium polysilicates.

4. A polyolefin film according to any of claims 1 to 3, **characterized in that** the polysilicate coating is a mixture of lithium and potassium polysilicate of the general formula (Li₂O)ₓ(K₂O)₁₋ₓ(SiO₂)_{y} wherein x is the mole fraction of Li₂O and y is the molar ratio of SiO₂:M₂O, and x = 0.4 to <1 and y = 1-10.

5. A polyolefin film according to any of claims 1 to 4, **characterized in that** the primer layer is a layer of PVOH.

6. A polyolefin film according to any of claims 1 to 5, **characterized in that** the PVOH has a degree of hydrolysis of 85 to <100 %.

7. A polyolefin film according to any of claims 1 to 6, **characterized in that** layer Z comprises 80 to 100% by weight of a maleic anhydride-grafted polypropylene homopolymer, propylene copolymer or polyethylene.

8. A polyolefin film according to any of claims 1 to 7, **characterized in that** the maleic anhydride-grafted polypropylene homopolymer, propylene copolymer or polyethylene has a maleic anhydride content of 0.05-3% by weight based on the weight of the polymer.

9. A polyolefin film according to any of claims 1 to 8, **characterized in that** the maleic anhydride-grafted polypropylene homopolymer, propylene copolymer or polyethylene has a melting point of 150 to 165 °C and a Vicat softening point of 120-150°C.

10. A polyolefin film according to any of claims 1 to 9, **characterized in that** layer Z additionally comprises >0 to 30% by weight of non-modified olefinic polymers of propylene, ethylene or butene units, preferably polyethylene, polypropylene, propylene terpolymers and propylene copolymers.

11. A polyolefin film according to any of claims 1 to 10, **characterized in that** the base film has on the opposite surface of the base layer a further top layer of sealable polyolefinic polymers.

12. A polyolefin film according to any of claims 1 to 11, **characterized in that** layer Z has a layer thickness of 0.3 to 3 µm.

13. A polyolefin film according to any of claims 1 to 12, **characterized in that** first a base film is produced by the coextrusion method, said base film comprising base layer B and layer Z, and subsequently the surface of layer Z is coated with PVOH, and afterwards a polysilicate coating is applied to the PVOH coating.

14. A polyolefin film according to any of claims 1 to 13, **characterized in that** the coextruded base film has further coextruded layers and the base film is a three-layer, four-layer or five-layer base film, and the further layers are made of polyolefins.

15. A polyolefin film according to any of claims 1 to 13, **characterized in that** the coextruded base film is a three-layer film having a sealable top layer on the opposite side of the base layer, said top layer being made of propylene copolymers or propylene terpolymers.

16. A polyolefin film according to any of claims 1 to 15, **characterized in that** the polyolefin film has an oxygen permeability at 23 °C and 50 % relative humidity of less than 1 cm³/m² * day * bar.

17. A laminate of a coated polyolefin film according to any of claims 1 to 16, **characterized in that** the polyolefin film is laminated with a polyethylene film into a laminate using a laminating adhesive, the lamination being done against the polysilicate-coated side.

18. A laminate according to claim 17, **characterized in that** the laminate has an oxygen permeability at 23 °C and 50 % relative humidity of less than 0.5 cm³/m² * day * bar.

19. A laminate according to any of claim 17 or claim 18, **characterized in that** a solvent-free laminating adhesive is used for the lamination.

20. A method for producing a coated film, **characterized in that** a coextruded, biaxially oriented film is produced, which comprises a base layer B and a first top layer Z and a second top layer of sealable polyolefins, layer Z being made of maleic anhydride-grafted polyolefin and the surface of layer Z being provided with a PVOH coating, and a polysilicate coating being applied from an aqueous solution to the surface of the PVOH coating.

## Revendications

1. Feuille en polyoléfine revêtue, co-extrudée, biaxialement orientée, comprenant au moins une couche de base B en polyoléfines et une couche de couverture Z en polyoléfines modifiées à l'anhydride maléique, **caractérisée en ce qu'**un revêtement constitué d'une couche de fond a été appliqué sur la surface de la couche de couverture, ledit revêtement étant appelé couche de fond P, et un revêtement inorganique constitué de polysilicates de lithium-potassium a été appliqué sur ladite couche de fond P, ce dernier revêtement formant une couche en polysilicate.

2. Feuille en polyoléfine selon la revendication 1, **caractérisée en ce que** la feuille primaire co-extrudée et biaxialement orientée présente, sur le côté opposé à la couche Z, une autre couche de couverture.

3. Feuille en polyoléfine selon l'une des revendications 1 à 2, **caractérisée en ce que** le revêtement en polysilicate a été appliqué à partir d'une solution aqueuse de polysilicates de lithium et de potassium.

4. Feuille en polyoléfine selon l'une des revendications 1 à 3, **caractérisée en ce que** le revêtement en polysilicate est un mélange de polysilicate de lithium et de potassium répondant à la formule générale (Li₂O)ₓ(K₂O)₁₋ₓ(SiO₂)_{y}, dans laquelle x est la fraction molaire de Li₂O et y est le rapport molaire SiO₂:M₂O, x étant = 0,4 4 à < 1 et y étant 1 à 10.

5. Feuille en polyoléfine selon l'une des revendications 1 à 4, **caractérisée en ce que** la couche de fond est une couche en PVOH.

6. Feuille en polyoléfine selon l'une des revendications 1 à 5, **caractérisée en ce que** ledit PVOH présente un degré d'hydrolyse compris entre 85 et < 100 %.

7. Feuille en polyoléfine selon l'une des revendications 1 à 6, **caractérisée en ce que** la couche Z contient 80 à 100 % en poids d'un homopolymère de polypropylène, copolymère de propylène ou polyéthylène, greffé d'anhydride maléique.

8. Feuille en polyoléfine selon l'une des revendications 1 à 7, **caractérisée en ce que** ledit homopolymère de polypropylène, copolymère de propylène ou polyéthylène, greffé d'anhydride maléique, présente une teneur un anhydride maléique comprise entre 0,05 et 3 % en poids, par rapport au poids du polymère.

9. Feuille en polyoléfine selon l'une des revendications 1 à 8, **caractérisée en ce que** ledit homopolymère de polypropylène, copolymère de propylène ou polyéthylène, greffé d'anhydride maléique, présente un point de fusion compris entre 150 et 165°C et un point de ramollissement selon Vicat compris entre 120 et 150 °C.

10. Feuille en polyoléfine selon l'une des revendications 1 à 9, **caractérisée en ce que** ladite couche Z contient, en outre, > 0 à 30 % en poids de polymères oléfinique non-modifiés, constitués d'unités de propylène, d'éthylène ou de butène, s'agissant de préférence de polyéthylène, de polypropylène, de terpolymères de propylène et de copolymères de propylène.

11. Feuille en polyoléfine selon l'une des revendications 1 à 10, **caractérisée en ce que** la feuille primaire présente, sur la surface à l'opposé de la couche de base, une autre couche de couverture en polymères polyoléfiniques aptes au scellement.

12. Feuille en polyoléfine selon l'une des revendications 1 à 11, **caractérisée en ce que** ladite couche Z présente une épaisseur de couche comprise entre 0,3 et 3 µm.

13. Feuille en polyoléfine selon l'une des revendications 1 à 12, **caractérisée en ce qu'**on réalise d'abord, selon le procédé de co-extrusion, une feuille primaire comprenant au moins la couche de base B et la couche Z pour ensuite revêtir la surface de la couche Z avec du PVOH et ensuite appliquer sur le revêtement de PVOH un revêtement en polysilicate.

14. Feuille en polyoléfine selon l'une des revendications 1 à 13, **caractérisée en ce que** ladite feuille primaire co-extrudée présente d'autres couches co-extrudées et la feuille primaire est une feuille primaire à trois couches, à quatre couches ou à cinq couches et lesdites autres couches sont constituées de polyoléfines.

15. Feuille en polyoléfine selon l'une des revendications 1 à 13, **caractérisée en ce que** ladite feuille primaire co-extrudée est une feuille à trois couches ayant, sur le côté opposé à la couche de base, une couche de couverture apte au scellement constituée de copolymères de propylène ou de terpolymères de propylène.

16. Feuille en polyoléfine selon l'une des revendications 1 à 15, **caractérisée en ce que** la feuille en polyoléfine présente, à 23 °C et 50 % d'humidité relative, une perméabilité à l'oxygène inférieur à 1 cm³/m² * jour * bar.

17. Matériau stratifié constitué d'une feuille en polyoléfine revêtue selon l'une des revendications 1 à 16, **caractérisé en ce que** ladite feuille en polyoléfine est contrecollé, au moyen d'un adhésif de contrecollage, avec une feuille en polyéthylène pour ainsi former un matériau stratifié, ledit contrecollage étant réalisé avec le côté pourvu d'un revêtement en polysilicate.

18. Matériau stratifié selon la revendication 17, **caractérisé en ce que** ledit matériau stratifié présente, à 23 °C et 50 % d'humidité relative, une perméabilité à l'oxygène inférieure à 0,5 cm³/m² * jour * bar.

19. Matériau stratifié selon l'une des revendications 17 ou 18, **caractérisé en ce qu'**un adhésif de contrecollage exempt de solvant est utilisé pour réaliser le contrecollage.

20. Procédé de fabrication d'une feuille, **caractérisé en ce que** l'on réalise une feuille co-extrudée, biaxialement orientée qui présente une couche de base B et une première couche de couverture Z et une deuxième couche de couverture en polyoléfines aptes au scellement, ladite couche Z étant constituée d'un polyoléfine greffée d'anhydride maléique et la surface de ladite couche Z étant pourvue d'un revêtement en PVOH et un revêtement en polysilicate étant appliqué, à partir d'une solution aqueuse, sur ladite surface du revêtement en PVOH.
